# EUROPEAN PATENT APPLICATION

(11) **EP 4 822 575 A1**
(43) Date of publication of application: **14.10.2026**
(21) Application number: 25871290.0
(22) Date of filing: 22.09.2025
(51) Int. Cl.: G06F 21/62, G06Q 10/10

(54) **SCHEDULE MANAGEMENT APPLICATION AND INFORMATION PROCESSING DEVICE**

(30) Priority: 27.09.2024 JP 2024168911
(71) Applicant: Kawano, Michikazu, Tokyo 153-0051 (JP)
(72) Inventor: Kawano, Michikazu, Tokyo 153-0051 (JP)
(74) Representative: Puchberger & Partner Patentanwälte
(86) International application number: PCT/JP2025/033296
(87) International publication number: WO 2026/070747

(57) **Abstract**

In consideration of participants' privacy, restrictions are set to the range or time period during which an event supervisor can check participants' location information. An application causes a computer to implement: an event registration means; a location information acquisition means; a display time period setting means (407); a display range setting means (409); and a display control means (500) that causes the display unit to display an image of information indicating a location of a participant present within a limited range set by the display range setting means, by using a participant's location information acquired by the location information acquisition means during a limited time period set by the display time period setting means.

## Description

### CROSS-REFERENCE TO RELATED APPLICATIONS

This application claims the benefit of Japanese Patent Application No. 2024-168911 filed on September 27, 2024, which is incorporated by reference herein in its entirety.

### TECHNICAL FIELD

The techniques disclosed in the present application relate to a schedule management application and an information processing device on which this schedule management application is installed.

### RELATED ART

A known schedule management application according to conventional techniques is a schedule management application in which combines a schedule management function and a GPS function are combined (Non-Patent Literature 1). An applications for searching the location of a child or other objects using GPS is also known (Non-Patent Literature 2 and Non-Patent Literature 3).

### RELATED ART DOCUMENTS

### Non-Patent Documents

Non-Patent Document 1:
   https://www.docomo.ne.jp/service/imadoco/parent_usage.html
Non-Patent Document 2: https://www.softbank.jp/mobile/service/mimamorigps/
Non-Patent Document 3: https://apps.apple.com/jp/app/id1669661485

### SUMMARY

The applications according to the above-listed Non-Patent Literatures 1 to 3 allow restrictions to be set on neither the area nor time for search of a child's location. For example, the applications disclosed in the Non-Patent Literatures 1 to 3 assume that parents will check the location of a child thereof. Therefore, the parents need to be able to check the child's whereabouts at any desired time. Accordingly, restrictions can be set on neither the area nor time for checking a child's location with the applications according to the Non-Patent Literatures 1 to 3.

However, for instance, for an event supervisor to check the locations of event participants, the supervisor only needs to be able to confirm presence of the participants at and around the event venue at the time of, and before or after, the event. For example, the team manager or coach of a scheduled soccer game only needs to be able to confirm the presence of soccer team members at and around the place (ground) where the game is to be held at the time of, and before or after, the game. Allowing the manager or coach to check the members' locations at and around the soccer game venue at times other than during or immediately before or after the game may infringe on the members' privacy. Therefore, restrictions have to be set on the site or time periods about which the event supervisor can check participants' locations.

Accordingly, the present application discloses techniques with an aim to provide a schedule management application and an information processing device that allow restrictions to be set on the range or time periods about which an event supervisor can check participants' location information in consideration of participants' privacy.

A schedule management application according to one embodiment of the present disclosure allows for registration of information of plural events, and causes a computer to function as: an event registration means for registering a name of an event, a venue of the event, a participant of the event, and a supervisor who supervises the participant; a location information acquisition means for acquiring location information of a smartphone (hereinafter, "phone") of the event participant; a display range setting means for setting a location information display range, which indicates a limited range in which an image of location information of the event participant's phone is allowed to be displayed on a display unit; and a display control means causing the display unit to display an image of information indicating a location of the participant's phone present within a limited range set by the display range setting means, by using the location information of the participant's phone acquired by the location information acquisition means. The schedule management application according to one embodiment of the present disclosure may cause the computer to function as a display time period setting means for setting a location information display time period, which indicates a limited time period within which an image of location information of the event participant's phone is allowed to be displayed on the display unit. The event registration means may further register a time of the event. In this case, the display control means causes the display unit to display an image of information indicating a location of the participant present within a limited range set by the display range setting means, by using the participant's location information acquired by the location information acquisition means during a limited time period set by the display time period setting means.

An information processing device according to one embodiment of the present disclosure executes a schedule management application that allows for registration of information of plural events, and includes: an event registration means for registering an event name, an event venue, an event participant, and a supervisor who supervises the participant; a location information acquisition means for acquiring location information of an event participant's phone; a display range setting means for setting a location information display range, which indicates a limited range in which an image of location information of the event participant's phone is allowed to be displayed on a display unit; and a display control means causing the display unit to display an image of information indicating a location of the participant's phone present within a limited range set by the display range setting means, by using the location information of the participant's phone acquired by the location information acquisition means. The information processing device according to one embodiment of the present disclosure may further include a display time period setting means for setting a location information display time period, which indicates a limited time period during which an image of location information of the event participant's phone is allowed to be displayed on the display unit. The event registration means may further register a time of the event. In this case, the display control means causes the display unit to display an image of information indicating a location of a participant present within a limited range set by the display range setting means, by using the participant's location information acquired by the location information acquisition means during a limited time period set by the display time period setting means.

### ADVANTAGEOUS EFFECT OF INVENTION

The techniques disclosed in the present application provide a schedule management application and an information processing device that allow restrictions to be set on the range or time periods during which an event supervisor can check participants' phone locations in consideration of participants' privacy.

### BRIEF DESCRIPTION OF THE DRAWINGS

Figure 1A is a block diagram illustrating a hardware configuration of a computer such as a smartphone on which the schedule management application is installed.
Figure 1B is a functional block diagram illustrating the functions of a computer such as a smartphone on which the schedule management application is installed.
Figure 2 is a diagram illustrating data used by the schedule management application.
Figure 3 is a diagram illustrating a screen for explaining the user registration function in the schedule management application.
Figure 4A is a diagram illustrating a screen for explaining the event registration function in the schedule management application.
Figure 4B is a diagram illustrating a screen for explaining the event registration function in the schedule management application.
Figure 5 is a diagram illustrating a GPS map screen on a supervisor's phone for explaining the function in the schedule management application that checks the location of a participant's phone before the start of an event.
Figure 6 is a diagram illustrating a screen on a supervisor's phone for explaining the function in the schedule management application that notifies a participant's departure.
Figure 7 is a diagram illustrating a GPS map screen on a supervisor's phone for explaining the function in the schedule management application that indicates the arrival of a participant's phone at a meeting place.
Figure 8 is a diagram illustrating a screen on a supervisor's and a guardian's phone for explaining the function in the schedule management application that notifies the supervisor's phone of the arrival of a participant's phone at a meeting place.
Figure 9 is a diagram illustrating a GPS map screen on a guardian's phone for explaining the function in the schedule management application that checks the location of a participant's phone before the start of an event.
Figure 10 is a diagram illustrating a screen on a participant's phone for explaining the function in the schedule management application that sends a message from a supervisor's phone when the participant's phone arrives at a meeting place.
Figure 11 is a diagram illustrating a screen on a supervisor's phone for explaining the function in the schedule management application that notifies the supervisor of an absent participant immediately before the start of an event.
Figure 12A is a diagram illustrating a GPS map screen on a supervisor's phone for explaining the function in the schedule management application that displays a screen of the picture and name of a participant who is present.
Figure 12B is a diagram illustrating a screen on a supervisor's phone for explaining the function in the schedule management application that displays a screen of the picture and name of a participant who is present.
Figure 13A is a diagram illustrating a schedule details screen on a supervisor's phone for explaining the function in the schedule management application that displays a screen of the picture and name of an event participant.
Figure 13B is a diagram illustrating a screen on a supervisor's phone for explaining the function in the schedule management application that displays a screen of the picture and name of an event participant.
Figure 14A is a diagram illustrating a screen on a supervisor's phone for explaining the function in the schedule management application that sends a message from a supervisor's phone to a specified participant's phone using the GPS map screen.
Figure 14B is a diagram illustrating a screen on a supervisor's phone for explaining the function in the schedule management application that sends a message from a supervisor's phone to a specified participant's phone using the GPS map screen.
Figure 15A is a diagram illustrating a screen on a supervisor's phone for explaining the function in the schedule management application that sends a message from a supervisor's phone to a specified participant's phone using the schedule details screen.
Figure 15B is a diagram illustrating a screen on a supervisor's phone for explaining the function in the schedule management application that sends a message from a supervisor's phone to a specified participant's phone using the schedule details screen.
Figure 16 is a diagram illustrating a screen on a participant's phone for explaining the function in the schedule management application that displays an encouragement message screen immediately before the start of the event.
Figure 17A is a diagram illustrating a screen on a supervisor's phone for explaining the function in the schedule management application that displays a video or the like according to the results of the event from the schedule details screen.
Figure 17B is a diagram illustrating a screen on a participant's phone for explaining the function in the schedule management application that displays a video or the like according to the results of the event.
Figure 18A is a diagram illustrating a screen on a supervisor's phone for explaining the function in the schedule management application that displays a screen effect or the like according to the results of the event via the schedule details screen.
Figure 18B is a diagram illustrating a GPS map screen on a participant's phone for explaining the function in the schedule management application that displays a screen effect or the like according to the results of the event.
Figure 19 is a diagram illustrating a screen on a participant's phone for explaining the function in the schedule management application that allows communication from the participant's phone to a guardian's phone.
Figure 20A is a diagram illustrating a message entry screen on a supervisor's phone for explaining the function in the schedule management application that sends a message from the supervisor's phone to a guardian's phone.
Figure 20B is a diagram illustrating a message display screen on a guardian's phone for explaining the function in the schedule management application that sends a message from the supervisor's phone to the guardian's phone.
Figure 21 is a diagram illustrating a screen on a supervisor's phone for explaining the function in the schedule management application that notifies the supervisor's phone that a participant has returned home after the end of the event.
Figure 22 is a diagram illustrating a screen on a supervisor's phone for explaining the function in the schedule management application that notifies the supervisor's phone that a participant has not returned home after the end of the event.
Figure 23 is a diagram illustrating a screen on a guardian's phone for explaining the function in the schedule management application that notifies the guardian's phone that a participant has not returned home after the end of the event.
Figure 24 is a diagram illustrating a GPS map screen on a guardian's phone for explaining the function in the schedule management application that notifies the return-home status of a participant after the end of the event.
Figure 25 is a diagram illustrating a screen on a supervisor's phone for explaining the function in the schedule management application that sets a display time period and an acquisition time period of location information.
Figure 26 is a flowchart showing the process steps executed by the schedule management application.
Figure 27 is an information processing flowchart for explaining the operations of the supervisor's, participant's, and guardian's smartphones 101.
Figure 28 is a diagram illustrating a screen on a phone for explaining the function in the schedule management application that displays a graph.

### DESCRIPTION OF EXEMPLARY EMBODIMENTS

Various embodiments will be hereinafter described with reference to the accompanying drawings. Same constituent elements in the drawings are given the same reference symbols. Note that some constituent elements that are depicted in one drawing may be omitted in another for the convenience of description. Also note that the accompanying drawings are not necessarily to accurate scale.

### 1. OVERVIEW OF SCHEDULE MANAGEMENT APPLICATION

The schedule management application 100 (hereinafter, "management app") according to one embodiment is, roughly speaking, software that allows management of event schedules, which involve gathering of participants, in everyday life or work on a smartphone (hereinafter, "phone"), personal computer, tablet, smartwatch, and the like. The management app 100 can record and manage various schedules including children's school events, family trip itineraries, school classes, and part-time work shifts. The management app 100 is to be used by a wide range of users including corporate workers, homemakers (including husbands), and students. The management app 100 according to one embodiment includes many convenient features including GPS functions, color-coded schedules, widgets, and picture storage. The management app 100 according to one embodiment can manage schedules for months, weeks, or days according to individuals' lifestyles or business needs. In short, the management app 100 uses GPS to display images of participants' phone locations on a map, facilitating confirmation of their arrival at a destination, while also restricting the range or time periods for checking location information in consideration of privacy.

### 2-1. HARDWARE CONFIGURATION OF SMARTPHONE

A hardware configuration of a smartphone 101 on which the management app 100 according to one embodiment is installed will be described. The hardware on which the management app 100 according to one embodiment is installed is not limited to smartphones and may be any information processing device, such as a personal computer, tablet, smartwatch, and so on.

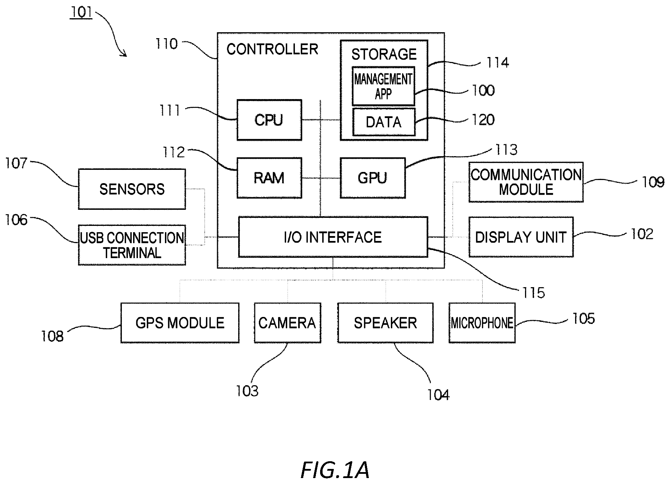

As illustrated in Figure 1A, the smartphone 101 generally includes a display unit 102, a camera 103, a speaker 104, a microphone 105, a USB connection terminal 106, various sensors 107, a GPS module 108, a communication module 109, and a controller 110.

The controller 110 includes a CPU (Central Processing Unit) 111, a RAM (Random Access Memory) 112, a GPU (Graphics Processing Unit) 113, a storage 114, and an I/O interface 115.

The CPU 111 functions as the brain of the smartphone 101, running an OS (Operating System) and applications and processing data. The RAM 112 is a main memory used for temporary data storage. The GPU 113 processes images and videos. The storage 114 stores various types of data such as user data, OS, and applications.

The smartphone 101 installs the management app 100 downloaded from an app management site (e.g., Google Play Store or APP Store) via a network. The storage 114 stores various apps including the downloaded management app 100. The storage 114 also stores various types of data necessary for the execution of the management app 100 such as data 120.

The I/O interface 115 connects the controller 110 with peripheral devices (display unit 102, camera 103, speaker 104, microphone 105, USB connection terminal 106, various sensors 107, GPS module 108, and communication module 109) of the controller 110 to allow communication between them.

The display unit 102 is a liquid crystal display or an organic EL display for displaying various screens to be described later. The camera 103 captures still images or videos. The speaker 104 converts an electrical signal into a physical sound. The microphone 105 converts a physical sound into an electrical signal. The USB connection terminal 106 functions both as the charging terminal of the smartphone 101, and as the input/output terminal for allowing input and output of information to and from the smartphone 101. The sensors 107 include an acceleration sensor, a gyro sensor, and the like. The GPS module 108 receives a signal from an artificial satellite and outputs location information that indicates the current location of the smartphone 101. The communication module 109 is an electronic component in which a controller that controls the communication functions and software are integrated. The communication module 109 connects to and communicates with a LAN (Local Area Network) or a moving communication system for communication with external equipment.

### 2-2. FUNCTIONAL BLOCK DIAGRAM OF SMARTPHONE

A functional block diagram of the smartphone 101 on which the management app 100 according to one embodiment is installed will be described.

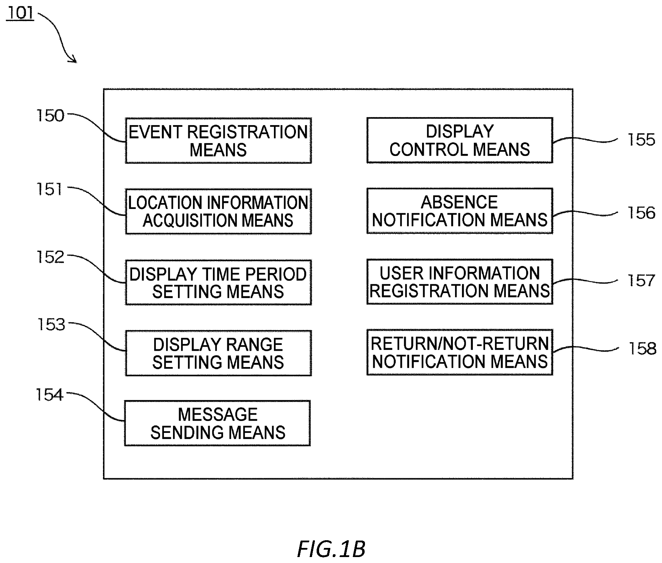

As shown in Figure 1B, the smartphone 101 includes an event registration means 150, a location information acquisition means 151, a display time period setting means 152, a display range setting means 153, a message sending means 154, a display control means 155, an absence notification means 156, a user information registration means 157, and a return/not-return notification means 158. These means are implemented by the CPU 111 of the smartphone 101 executing the management app 100.

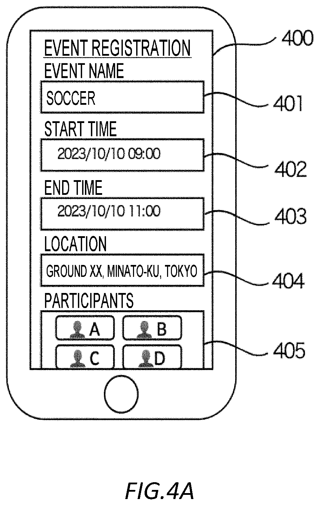

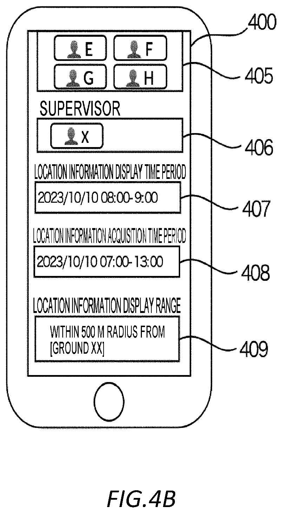

The event registration means 150 registers an event name, an event time (including a start time and an end time), an event venue, an event participant, and a supervisor who supervises the participant (see 401 to 409 in Figure 4A and Figure 4B).

The location information acquisition means 151 acquires the location information (GPS data) of event participants.

The display time period setting means 152 sets a location information display time period, which is a time period during which the location information (GPS data) of the event participants can be displayed on the display unit 102.

The display range setting means 153 sets a location information display range, which is a range in which the location information (GPS data) of the event participants can be displayed on the display unit 102.

The message sending means 154 sends a message to a supervisor's information processing terminal (such as a smartphone) or an information processing terminal (such as a smartphone) of a guardian linked to a participant, if the participant's location as indicated by the location information (GPS data) acquired by the location information acquisition means 151 is within a predetermined range including the event venue.

The display control means 155 displays various types of information on the display unit 102. For example, the display control means 155 causes the display unit 102 to show information indicating the location of a participant present within a range set by the display range setting means 153, using the participant's location information (GPS data) acquired by the location information acquisition means 151 during a time period set by the display time period setting means 152.

The absence notification means 156 notifies a supervisor's information processing terminal (such as a smartphone), or an information processing terminal (such as a smartphone) of a guardian linked to a participant, that the participant is absent, if the participant's location as indicated by the location information (GPS data) acquired by the location information acquisition means 151 is not within a predetermined range including the event venue at a predetermined time before the time of the event.

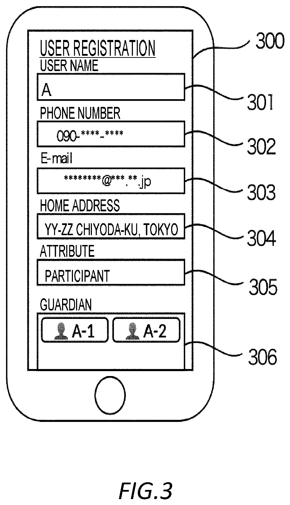

The user information registration means 157 registers return location information that indicates a return location (e.g., home address) of the participant (see 304 in Figure 3).

The return/not-return notification means 158 notifies a supervisor's information processing terminal (such as a smartphone) that the participant has returned, if the location as indicated by the participant's location information (GPS data) acquired by the location information acquisition means 151 is within a predetermined range including a location indicating the return location information, after the end of the time of the event. The return/not-return notification means 158 notifies a supervisor's information processing terminal (such as a smartphone) or an information processing terminal (such as a smartphone) of a guardian linked to a participant that the participant has not returned, if the location as indicated by the participant's location information acquired by the location information acquisition means 151 is not within the predetermined range including the location indicating the return location information, after the end of the time of the event.

### 3. DATA 120 USED BY MANAGEMENT APP 100

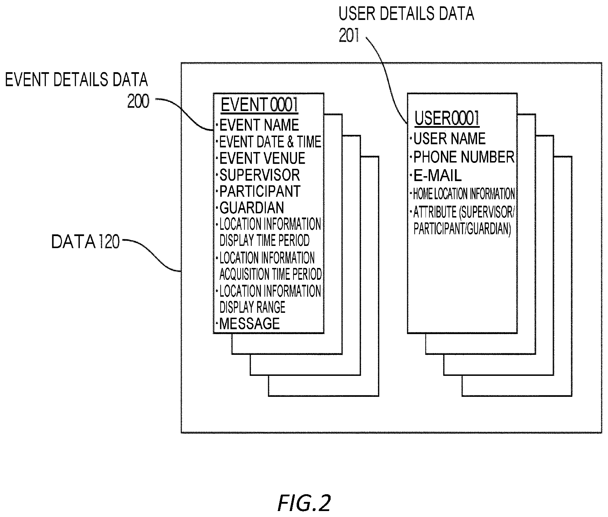

Figure 2 is a diagram illustrating data used by the management app 100. The data 120 used by the management app 100 includes event details data 200 of plural events registered in the management app 100, and user details data 201 of plural users indicating the details of users who hold events (hereinafter referred to as supervisors), users who participate in the events (hereinafter referred to as participants), and users who are parents and the like of the participants (hereinafter referred to as guardians).

### 3-1. EVENT DETAILS DATA 200

The event details data 200 includes event name data, event date and time data, event venue data, supervisor data, participant data, guardian data, location information display time period data, location information acquisition time period data, location information display range data, and message data.

The event name data represents the names of events registered in the management app 100. The event date and time data represents the times (start time and end time) of the events. The event date and time data may indicate only the time of the event, or may include the start time at which the event starts and the end time at which the event ends. The event venue data represents the venues of events (a venue may be referred to as a "meeting place"). For example, the event venue data may be coordinate data including longitude and latitude that represent a point on a map.

The supervisor data represents supervisors of the events. The supervisor data may represent a person who registered the event in the management app 100, or a manager of the event. For example, if the event is a soccer game, the supervisor data indicates a manager or coach of the team participating in the soccer game. The data indicating a supervisor may for example be the name or nickname of the supervisor. The participant data represents participants of the events. For example, if the event is a soccer game, the participant data indicates the players of the team participating in the soccer game. The data indicating a participant may for example be the name or nickname of the participant. The guardian data represents guardians of the event participants. For example, if this event is a soccer game, the guardian data indicates the guardians of the players in the team participating in the soccer game. The data indicating a guardian may for example be the name or nickname of the guardian.

The location information display time period data represents a time period during which the location information (GPS data) of a participant can be acquired and displayed by the supervisor's app. The supervisor's app can acquire and display the location information of the participant's phone during the time period as indicated by the location information display time period data. For example, if this event is a soccer game, and if the location information display time period data indicates a preset time period of 8:00 to 9:00, the supervisor's app can acquire, between 8:00 and 9:00, the phone location information of a participant who will be playing in the soccer game, and display the participant's phone location on a GPS map on the display unit of the supervisor's smartphone 101.

The location information display time period data can be set, for example, by specifying a range of time (e.g., 8:00 to 9:00), or a period of time associated with the start time or end time of the event (e.g., "one hour before" the event start time).

The location information acquisition time period data represents a time period during which the location information (GPS data) of a participant's phone can be acquired by the supervisor's app. The supervisor's app can acquire the location information of the participant's phone during the time period as indicated by the location information acquisition time period data. For example, if this event is a soccer game, and if the location information acquisition time period data indicates a preset time period of 7:00 to 13:00, the supervisor's app can acquire, between 7:00 and 13:00, the phone location information of a participant who will be playing in the soccer game.

This location information acquisition time period data is used to notify the supervisor's or guardian's phone that a participant has left home and/or returned home. Therefore, the location information of the participant's phone acquired during the time period as indicated by the location information acquisition time period data is not shown on the map. The display unit of the supervisor's or guardian's smartphone 101 displays the information indicating that the participant has left home and/or returned home.

The location information display range data represents a range (area) in which the location information (GPS data) of a participant's phone can be acquired and displayed by the supervisor's app. The supervisor's app can display the participant's location based on the phone location information only within the range as indicated by the location information display range data. For example, if the event is a soccer game, and if the location information display range data indicates an area (e.g., a range within a radius of 500 m around the location) including where the soccer game is held (location as indicated by the event venue data mentioned above), the supervisor's app can display the phone location of the participant who will be playing in the soccer game on the map only within this area. The supervisor's app cannot display the location of the participant's phone on the map outside of this area. Therefore, while the supervisor's app cannot determine the location of the participant's phone on the map outside of this area, it can determine that the participant is not present within this area. This prevents the detailed location information of the participant's phone outside of the area, which is private information, from being disclosed to the supervisor's app.

The location information display range data can be set, for example, by specifying a range around a place (e.g., a radius of 500 m from the event venue). Alternatively, a range can be specified on the map by the supervisor manually, or using a preset figure such as a circle or rectangle.

The message data includes still images, videos, music, and text messages registered in advance by the supervisor and/or guardian. If this event is a soccer game, for example, the message data may be an encouragement message sent from the supervisor or guardian to participants before the game, a congratulations message for the participants who won the game, and/or a cheer-up message for the participants who lost the game.

### 3-2. USER DETAILS DATA

The user details data 201 includes user name data, phone number data, e-mail data, home location data, attribute data, and so on.

The user name data represents the names of supervisors, participants, or guardians. The phone number data represents the phone numbers of supervisors, participants, or guardians. The e-mail data represents the e-mail addresses of supervisors, participants, or guardians.

The home location data represents the locations of participant's homes. For example, the home location data may be coordinate data including longitude and latitude that represent a point on a map.

The attribute data represents the attributes of users and the attributes of the users indicate any one of a supervisor, a participant, or a guardian. If the user attribute indicates that the user is a supervisor, this user (supervisor) can use the management app 100 to acquire the location information of a participant's phone and to display the current location of the participant's phone on the management app 100. If the user attribute indicates that the user is a participant, this user (participant) can use the management app 100 to send the location information of the participant's phone to the supervisor's or guardian's management app 100. If the user attribute indicates that the user is a guardian, this user (guardian) can use the management app 100 to acquire the location information of the participant's phone associated with the guardian's phone, and to display the current location of the participant's phone on the management app 100.

The supervisor can use the management app 100 to acquire the location information of all participants' phones and to display their current locations on the management app 100. On the other hand, the guardian can use the management app 100 to acquire the phone location information of only the participant associated with the guardian's phone, and to display the current location of this participant's phone alone on the management app 100. This provides technical protection of user privacy. Therefore, the management app 100 does not allow a guardian to display the current location of a participant's phone that is not associated with the guardian's phone. This prevents the detailed location information of the participant's phone, which is private information, from being disclosed to unassociated guardians.

The management app 100 may allow the supervisor to acquire the location information of all participants' phones only during a time period specified by the supervisor. This eliminates the need for the management app 100 to constantly acquire location information in the background, which helps save resources on the smartphone 101, on which the management app 100 is installed, and allows for secure information processing. The supervisor may use the management app 100 to acquire information only during a time period or within an area specified by the supervisor. This improves the memory efficiency on the smartphone 101, on which the management app 100 is installed, which in turn saves the battery consumption and helps reduce communication costs.

### 4. FUNCTIONS OF THE MANAGEMENT APP 100

Next, various functions of the management app 100 according to one embodiment will be described.

### 4-1. USER REGISTRATION FUNCTION

The management app 100 has a user registration function that registers information on a supervisor who hosts an event, and participants of the event.

As illustrated in Figure 3, the management app 100 displays a user registration screen 300 on the smartphone 101 for registration of user details. The user registration screen 300 includes a user name field 301 for entering the name of a user, a phone number field 302 for entering a phone number of the user, an e-mail field 303 for entering an e-mail address of the user, a home address field 304 for entering a home address of the user, an attribute field 305 for entering the attribute of the user (supervisor/participant/guardian), and a guardian field 306 for entering a guardian of the user. The guardian field 306 may be enabled when the participant is selected in the attribute field 305.

The user enters information in each field on the user registration screen 300. The information entered in each field may be stored as user details data 201 when the user presses the registration button (not shown). The user registration function may include a feature that automatically deletes the user details data 201 after the elapse of a predetermined time for securing confidentiality. The data retention period can be set as suited when the user sets an event. The same applies to the event registration function.

### 4-2. EVENT REGISTRATION FUNCTION

As illustrated in Figure 4A and Figure 4B, the management app 100 displays an event registration screen 400 on the smartphone 101 for registration of event details. The event registration screen 400 includes an event name field 401 for entering the name of an event, a start time field 402 for entering the start time of the event, an end time field 403 for entering the end time of the event, a place field 404 for entering the event venue, a participant field 405 for entering a participant of the event, a supervisor field 406 for entering a supervisor of the event, a display time period field 407 for specifying a time period during which the location information of the event participants' phones can be displayed, an acquisition time period field 408 for specifying a time period during which the location information of the event participants' phones can be acquired, and a display range field 409 for specifying a range in which the location information of the event participants' phones can be displayed.

The user enters information in each field on the event registration screen 400. The information entered in each field may be stored as event details data 200 when the user presses the registration button (not shown).

### 4-3. FUNCTION FOR CHECKING PARTICIPANT'S LOCATION BEFORE START OF EVENT

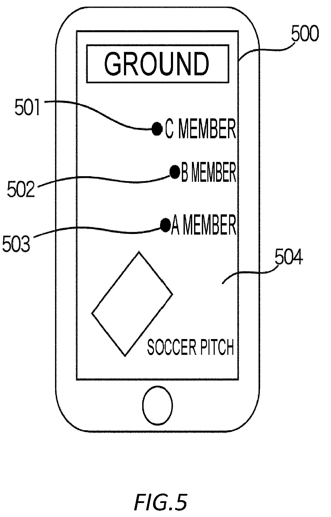

As illustrated in Figure 5, the supervisor's smartphone 101 displays a GPS map screen 500 indicating the location(s) of one or more participants' phones. For example, the management app 100 displays a GPS map image 504 on the GPS map screen 500 based on the GPS map information acquired via API (Application Programming Interface) available to the management app 100, and displays markers 501 to 503 indicating the participants' phone locations over the GPS map image 504, only during a predetermined period (e.g., 1 hour) before the start time of the event, and only within an area including the ground specified as the venue (meeting place). The area may be variably set, for example, to a range within a radius of 500 m or 300 m from the ground. In the example of Figure 5, the GPS map screen 500 displays the markers 501 to 503 indicating the locations of participants A to C over the GPS map image 504 only for 1 hour before the start of the soccer game and only within a radius of 500 m from the soccer ground specified as the venue (meeting place). The intuitive interface shown in Figure 5 allows the manager or coach of the soccer team who is set as the supervisor to recognize the specific status of each participant (A to C).

Therefore, the manager or coach of the soccer team who is set as the supervisor can check the locations of the participants' phones within an area including the soccer ground from a predetermined time before the start of the soccer game, which can be set between 60 minutes (lower limit) and 120 minutes (upper limit), for example.

### 4-4. FUNCTION FOR NOTIFYING PARTICIPANT'S DEPARTURE

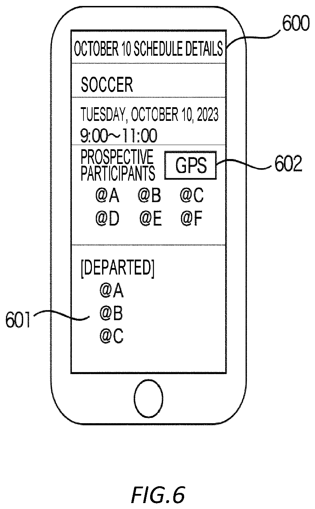

As illustrated in Figure 6, the supervisor's smartphone 101 displays a schedule details screen 600 indicating that one or more participants have departed for the event venue. The schedule details screen 600 indicates the details of the event, and includes information on the name of the event, the time of the event, and the (prospective) participants of the event. The schedule details screen 600 includes a Departed 601, which represents the participant who has departed for the event venue. The management app 100 on the supervisor's smartphone 101 acquires the location information of the participant's phone from the management app 100 of the participant's smartphone 101, and determines whether or not the participant has left home based on the location information. Alternatively, the management app 100 on the participant's smartphone 101 may determine whether or not the participant has left home based on calculated location information, and notify the management app 100 on the supervisor's smartphone 101 of the results.

This schedule details screen 600 may be displayed only on the supervisor's smartphone 101, or displayed on one or a plurality of smartphones 101 of the supervisor, participant and guardian.

If it is determined, from the location information of a participant's phone, that the participant is away from home a predetermined distance e.g., between 50 m (lower limit) and 150 m (upper limit), the management app 100 displays the participant as the Departed 601, who have departed for the event venue, on the schedule details screen 600. Figure 6 indicates the participants A, B, and C as participants who have departed for the event venue (Departed 601). Alternatively, they may be indicated as the participants who have departed for the event venue when they press a Departure button (not shown) for notification of their departure from home.

This schedule details screen 600 shows a GPS button 602 for displaying the map screen 500. This GPS button 602 is displayed on the schedule details screen 600 of the supervisor's or guardian's phone. The GPS button 602 may be displayed on the schedule details screen 600 of the participants' phones, or may not be displayed. When the supervisor presses the GPS button 602, the map screen 500 described above is displayed. On the other hand, when the guardian presses the GPS button 602, a map screen indicating the current location of the phone of only the participant associated with the guardian's phone (e.g., guardian's child) is displayed.

While the GPS button 602 is displayed on the schedule details screen 600 in this example, the screen to be displayed with the GPS button 602 is not limited to the schedule details screen 600 and may be displayed on any screen of the management app 100.

The participants who have departed for the event venue may be displayed on the schedule details screen 600, or on the map screen 500, or on the message screen to be described later.

### 4-5. FUNCTION FOR DISPLAYING ARRIVAL OF PARTICIPANT AT MEETING PLACE

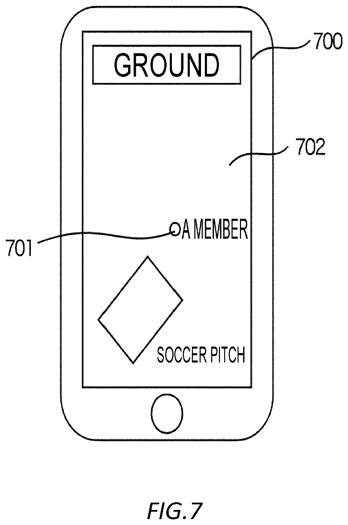

As illustrated in Figure 7, the supervisor's smartphone 101 displays a GPS map screen 700 indicating the arrival of a participant at or within a radius of, for example, 100 m (lower limit) or 300 m (upper limit) from the event venue (meeting place). Tapping the GPS button 602 of Figure 6 displays the GPS map screen 700 of Figure 7. The screen of Figure 7 can start showing the participant's location at a predetermined time (e.g., 1 hour) before the start time (e.g., 9:00) of the event, for example, from 8:00. The GPS map screen 700 of Figure 7 thus allows identification of participants' locations at a predetermined time before the start of the event. This GPS map screen 700 displays the name 702 or current location marker 701 of the participant who has arrived at the venue in a predetermined style (e.g., the marker indicating the participant's location changing color from blue to orange when the participant enters a predetermined range).

The management app 100 on the supervisor's smartphone 101 determines whether or not a participant has arrived at the event venue based on the location information provided by the management app 100 on the participant's smartphone 101. If it is determined that the participant has arrived, the management app displays the participant's name 702 and the current location marker 701 over the map in a predetermined style.

This GPS map screen 700 is displayed on the supervisor's and guardian's smartphone 101.

This GPS map screen 700 represents the most important key feature of this app that is to display location information with range or time restrictions.

### 4-6. FUNCTION FOR NOTIFYING SUPERVISOR OF ARRIVAL OF PARTICIPANT AT MEETING PLACE

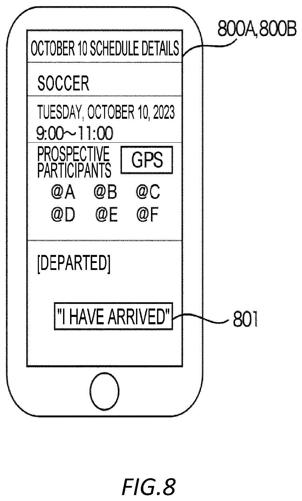

As illustrated in Figure 8, the supervisor's smartphone 101 displays a schedule details screen 800A indicating the arrival of a participant's phone at or within a radius of, for example, 100 m (lower limit) or 300 m (upper limit) from the event venue (meeting place). The schedule details screen 800A of Figure 8 is displayed when, with the screen of Figure 6 being displayed, a participant arrives at the event venue (meeting place) (arrives at or within a radius of 100 m or 200 m from the event venue (meeting place)). A notification of participant's arrival at the event venue is sent to the supervisor as shown in Figure 8. The Figure 7 screen changes to the Figure 8 screen when a Return marker (not shown) displayed on the screen is tapped. The schedule details screen 800A displays a message button 801 including the first few words or outline of the message sent from the smartphone 101 of the participant who has arrived at the venue. This message displayed on the schedule details screen 800A may be a message sent from the participant who has arrived at the venue, or may be an automated message sent on condition that the participant's phone has arrived at the venue.

The management app 100 on the supervisor's smartphone 101 determines whether or not the participant's phone has arrived at the event venue based on the location information provided by the management app 100 on the participant's smartphone 101. If it is determined that the participant has arrived, the management app sends a message notifying the arrival of the participant's phone. This notification may be a push notification. Alternatively, the arrival of the participant's phone may be notified with an audio.

This schedule details screen 800A is displayed on the supervisor's smartphone 101.

A message notifying the arrival of the participant's phone is displayed in the message field 801 of the schedule details screen 800A on the supervisor's phone. Alternatively, the schedule details screen 800A may display a message field (message button) 801, and change to another screen showing the details of the message sent by the participant (e.g., the entire text message) when the message button 801 is tapped. This screen shall be referred to as a "message screen".
Optionally, this schedule details screen 800A may include a feature that allows a reply to be sent to the received message.

### 4-7. FUNCTION FOR NOTIFYING GUARDIAN'S PHONE OF ARRIVAL OF PARTICIPANT'S PHONE AT MEETING PLACE

The guardian's smartphone 101 displays the schedule details screen 800B indicating the arrival of the participant's phone associated with the guardian's phone at or within a radius of, for example, 100 m (lower limit) or 300 m (upper limit) from the event venue (meeting place). The schedule details screen 800B displays a message button 801 including the first few words or outline of the message sent from the smartphone 101 of the participant who has arrived at the venue. This message displayed on the schedule details screen 800B may be a message sent from the participant who has arrived at the venue, or may be an automated message sent on condition that the participant's phone has arrived at the venue.

The management app 100 on the guardian's smartphone 101 determines whether or not the participant has arrived at the event venue based on the location information provided by the management app 100 on the participant's smartphone 101. If it is determined that the participant has arrived, the management app sends a message notifying the arrival of the participant's phone. This notification may be a push notification. Alternatively, the arrival of the participant's phone may be notified with an audio.

This schedule details screen 800B is displayed on the guardian's smartphone 101.

A message notifying the arrival of the participant's phone is displayed in the message field (message button) 801 of the schedule details screen 800B on the guardian's phone. Alternatively, the schedule details screen 800B may display a message field (message button 801), and change to another screen showing the details of the message sent by the participant (e.g., the entire text message) when the message button 801 is tapped. Optionally, this schedule details screen 800B may include a feature that allows a reply to be sent to the received message.

The message button 801 mentioned above may be displayed on the schedule details screen 800A or 800B, or on other screens.

The content of the first few words or outline of the message mentioned above is not limited as long as it notifies arrival, such as "notification of arrival".

### 4-8. FUNCTION FOR CHECKING LOCATION OF PARTICIPANT'S PHONE BEFORE START OF EVENT

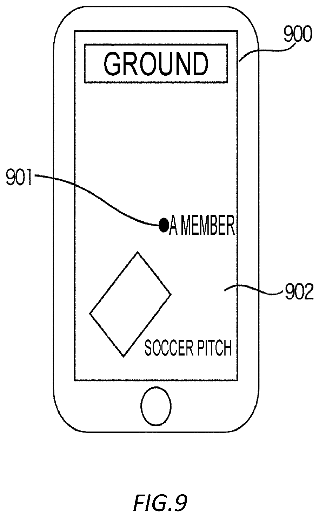

As illustrated in Figure 9, the guardian's smartphone 101 displays a GPS map screen 900 indicating the location of the participant's phone associated with the guardian's phone. For example, in the GPS map screen 900, the management app 100 displays the current location of the participant's phone over the GPS map image 902, only for 1 hour before the start time of the event, and/or only within a range of a radius of 500 m from the ground specified as the venue. In the GPS map screen 900, the marker 901 indicating the current location of the phone of the participant A associated with the guardian's phone (e.g., a guardian's child) is displayed over the GPS map image 902, only for 1 hour before the soccer game is started, and only within a range of a radius of 500 m from the soccer ground specified as the venue.

Therefore, the guardian can check the current location of the participant's phone associated with the guardian's phone from 60 minutes (lower limit) before the start of the soccer game, or from 90 or 120 minutes (upper limit) before, within a predetermined area including the soccer ground.

The time and area restrictions described above need not necessarily be set for the GPS map screen 900 that allows a guardian to check the current location of the participant's phone associated with the guardian's phone.

### 4-9. FUNCTION FOR SENDING MESSAGE FROM SUPERVISOR'S PHONE WHEN PARTICIPANT ARRIVES AT MEETING PLACE.

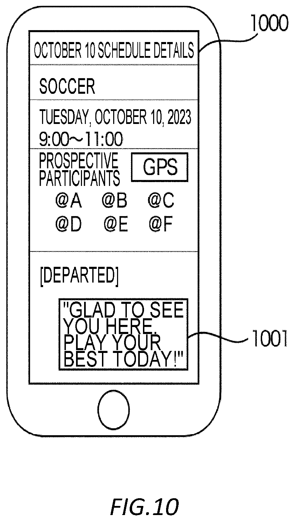

As shown in Figure 10, a message sent from the supervisor's or guardian's phone is displayed on the smartphone 101 of the participant who has arrived at the venue. The management app 100 displays a message 1001 sent from the supervisor's phone (e.g., "Glad to see you here. Play your best today!") on the event details screen 1000 on the phone of the participant who has arrived at the meeting place. The management app 100 may also display a message sent from the guardian's phone associated with the participant's phone (e.g., "Well done getting there. Have a great game today!") on the event details screen 1000 on the phone of the participant who has arrived at the meeting place.

This message displayed on the event details screen 1000 may be a message sent from the supervisor's or guardian's phone, or may be an automated message sent on condition that the participant's phone has arrived at the venue.

The message mentioned above may be displayed either on the event details screen or on the GPS map screen.

### 4-10. FUNCTION FOR NOTIFYING SUPERVISOR'S PHONE OF ABSENT PARTICIPANT IMMEDIATELY BEFORE START OF EVENT

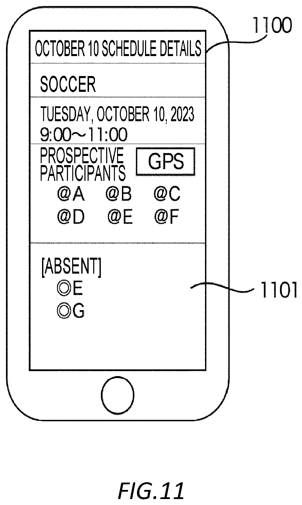

As illustrated in Figure 11, if a participant is not present within a predetermined range including the meeting place for the event at a predetermined time (e.g., 15 minutes) before the start time of the event, this participant is displayed as absent on the supervisor's smartphone 101. The management app 100 acquires the location information of participants' phones at a predetermined time before the start time of the event. If a participant is identified as being not present within a predetermined range including the meeting place for the event, this participant is displayed as absent on the event details screen 1100. In the example of Figure 11, the participants E and G are displayed as Absent 1101 on the event details screen.

The Absent marker 1101 mentioned above may be displayed either on the message screen to be described later or on the GPS map screen.

### 4-11. FUNCTION FOR DISPLAYING, ON SMARTPHONE, DETAILS OF PARTICIPANTS WHO ARE PRESENT VIA GPS MAP SCREEN

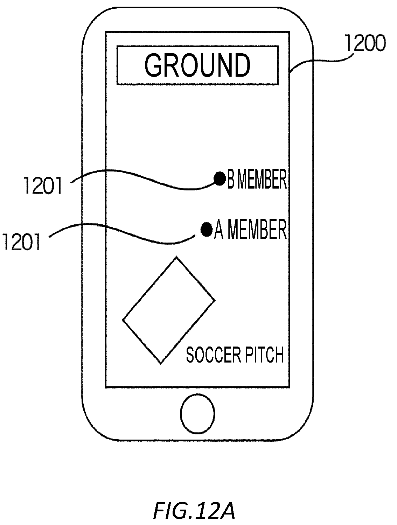

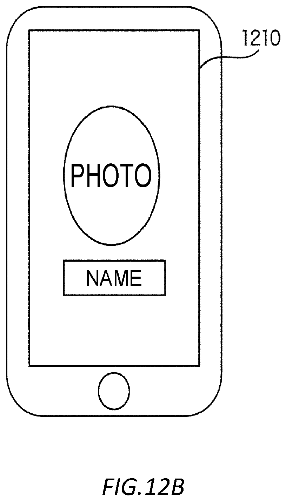

As illustrated in Figure 12A, the supervisor's smartphone 101 displays the names of the participants who have arrived at the meeting place for the event. The management app 100 can display a participant details screen 1210 showing the detailed data of the participant linked to a marker 1201 (or name) that indicates the current location of the participant's phone when the marker 1201 is selected on the GPS map screen 1200. As illustrated in Figure 12B, this participant details screen 1210 displays the photo and the name of the participant linked to the selected marker 1201. The participant details screen 1210 may display the participant's profile in addition to the photo and the name, such as age, gender, grade, team, and school.

### 4-12. FUNCTION FOR DISPLAYING, ON SMARTPHONE, DETAILS OF EVENT PARTICIPANTS

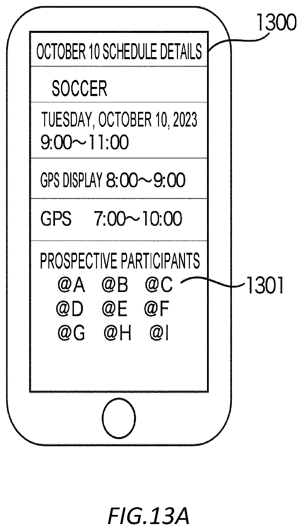

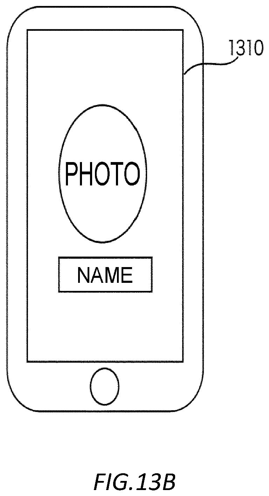

As illustrated in Figure 13A and Figure 13B, the supervisor's smartphone 101 displays the detailed data of the event participants. The management app 100 can display a participant details screen 1310 showing the detailed data of the participant linked to a name or icon 1301 shown on the event schedule details screen 1300 when the participant's name or icon 1301 is selected. This participant details screen 1310 displays the photo and the name of the participant linked to the selected name or icon 1301. The participant details screen 1310 may display the participant's profile in addition to the photo and the name, such as age, gender, grade, team, and school.

### 4-13. FUNCTION FOR SENDING MESSAGE FROM SUPERVISOR'S PHONE TO PARTICIPANT'S PHONE VIA GPS MAP SCREEN

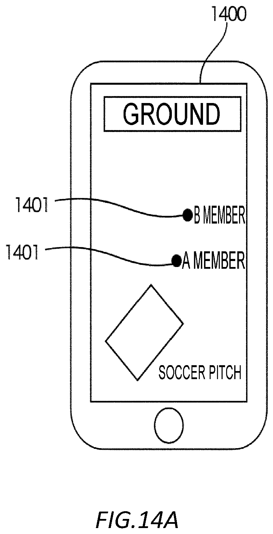

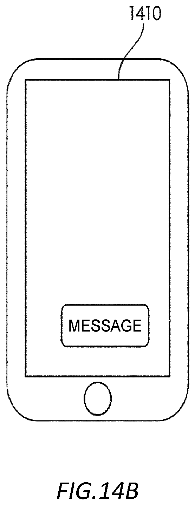

As illustrated in Figure 14A and Figure 14B, the supervisor's smartphone 101 may display a message sending screen 1410 for sending a message to the participant. The management app 100 can display the message sending screen 1410 for sending a message to a recipient linked to a marker 1401 that indicates the current location of the participant's phone when the marker 1401 is selected on the GPS map screen 1400.

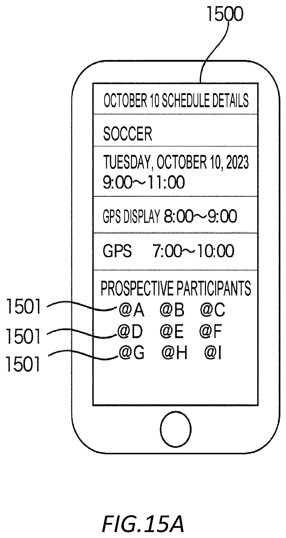

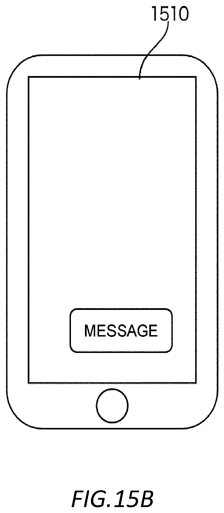

As illustrated in Figure 15A and Figure 15B, the management app 100 may also display a message sending screen 1510 for sending a message to a recipient linked to the participant's name or icon 1501 shown on the event schedule details screen 1500 when the name or icon 1501 is selected.

### 4-14. FUNCTION FOR DISPLAYING ENCOURAGEMENT SCREEN IMMEDIATELY BEFORE START OF EVENT

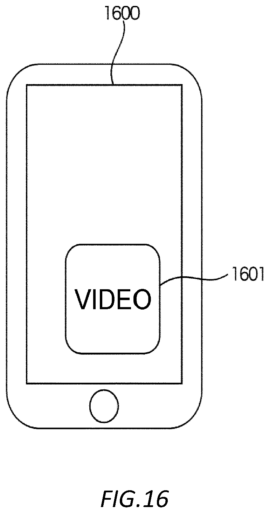

As illustrated in Figure 16, the participant's smartphone 101 may display a preset video at a predetermined time before the start time of the event. The supervisor sets a video in advance on the management app 100. When the management app 100 determines that a predetermined time before the event start time has been reached, the app distributes the video that has been preset by the supervisor to the participants' management apps 100. The participants can view an encouragement video 1601, which may include a still image, text, or audio message conveying encouragement, sent from the supervisor's or guardian's phone, for example, on a video view screen 1600 of the management app 100.

### 4-15. FUNCTION FOR DISPLAYING VIDEO ACCORDING TO EVENT RESULTS

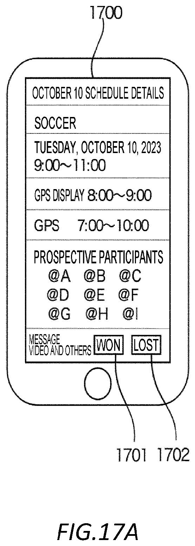

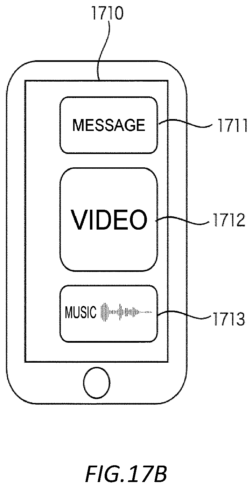

As illustrated in Figure 17A, the supervisor's smartphone 101 may include a function for sending a video or the like according to the results of the event to participants' phones. The supervisor's management app 100 may display buttons 1701 and 1702 that indicate the results of the event on the event schedule details screen 1700. For example, if the event is a competitive game with a win-lose outcome such as a soccer match, the management app 100 may display buttons 1701 and 1702 that respectively represent win and lose on the event schedule details screen 1700. When the supervisor selects the win button 1701 or the lose button 1702, a message 1711, a video 1712, and/or music 1713 expressing a win is output onto the message screen 1710 of the participants' phones, or a message 1711, a video 1712, and/or music 1713 expressing a loss is output onto the message screen 1710 of the participants' phones, as shown in Figure 17B.

### 4-16. FUNCTION FOR DISPLAYING SCREEN EFFECTS ACCORDING TO EVENT RESULTS ON GPS MAP SCREEN

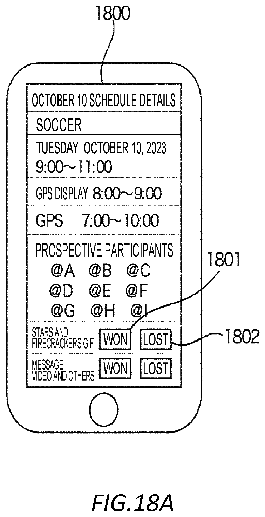

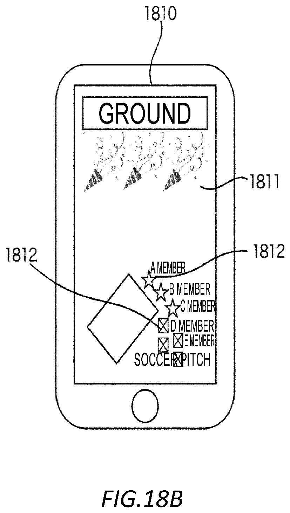

As illustrated in Figure 18A, the supervisor's smartphone 101 may include a function for sending a screen effect or the like according to the results of the event to participants' phones to be displayed on their GPS map screen. The supervisor's management app 100 may display buttons 1801 and 1802 that indicate the results of the event on the event schedule details screen 1800. For example, if the event is a competitive game with a win-lose outcome such as a soccer match, the management app 100 may display buttons 1801 and 1802 that respectively represent win and lose on the event schedule details screen 1800. When the supervisor selects the win button 1801 or the lose button 1802, a screen effect 1811 (e.g., graphics representing stars, firecrackers, or dolls) expressing a win, as shown in Figure 18B, or screen effects expressing a loss (not shown), such as graphics of tears or sweat, is output on the GPS map screen 1810 of the participants' phones. The screen effects may include color transitions, flashing, or changes in the graphics 1812.

### 4-17. FUNCTION FOR ALLOWING COMMUNICATION FROM PARTICIPANT'S PHONE TO GUARDIAN'S PHONE

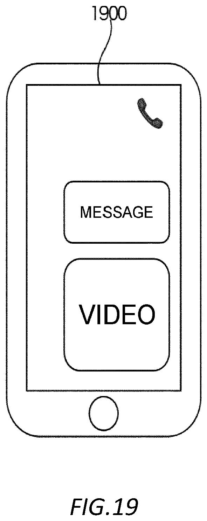

As illustrated in Figure 19, the participant's smartphone 101 includes a communication function that allows the participant to call the guardian's phone. The participant's management app 100 includes a function that allows the participant to call the phone of the guardian associated with the participant's phone, or to send a message or a video via a communication screen 1900. This allows the participants to share detailed content or results of the event with their guardians.

### 4-18. FUNCTION FOR SENDING MESSAGE FROM SUPERVISOR'S PHONE TO GUARDIAN'S PHONE

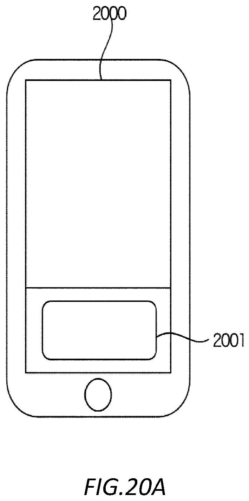

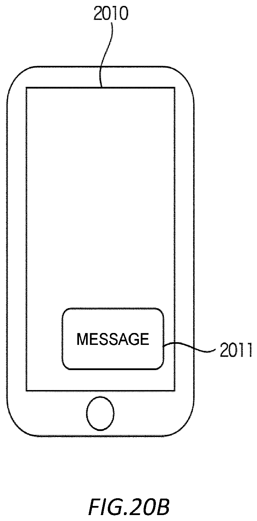

As illustrated in Figure 20A, the supervisor's smartphone 101 includes a function for sending a message collectively to plural guardians' phones from the supervisor's phone. The supervisor's management app 100 has a function for sending a message entered in the message entry field 2001 of the sending screen 2000 to the phones of the guardians of one or a plurality all of the event participants at once. This allows the supervisor to send detailed content or results of the event collectively to the guardians' phones. As a result, as illustrated in Figure 20B, the message 2011 sent from the supervisor's phone is displayed on the receiving screen 2010 of the guardians' smartphones 101.

### 4-19. FUNCTION FOR NOTIFYING SUPERVISOR'S PHONE THAT PARTICIPANT HAS RETURNED HOME AFTER EVENT

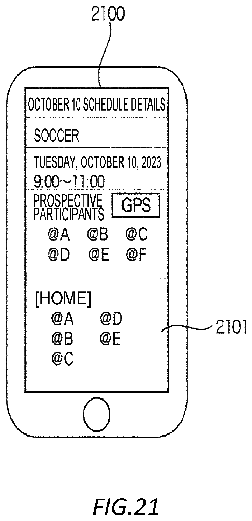

As illustrated in Figure 21, the supervisor's smartphone 101 includes a return home notification function for notifying that a participant has returned home after the event. The management app 100 determines whether or not a participant has arrived home based on the participant's phone location information. If it is determined that the participant has arrived home, the participant's status is changed to "returned home". The supervisor's management app 100 acquires the statuses of the event participants, and displays participants whose status is "returned home" as Home 2101 on the event schedule details screen 2100. A push notification with sound may be sent to the supervisor's management app 100 when a participant's status changes to "returned home".

Alternatively, the management app 100 on the participant's smartphone 101 may determine whether or not the participant has arrived home based on the participant's phone location information. If it is determined that the participant has arrived home, a notification of the participant's "returned home" status may be sent to the management app 100 on the supervisor's smartphone 101.

The participants indicated as Home 2101 mentioned above may be displayed either on the message screen or on the GPS map screen.

If it is determined, from the location information of a participant's phone, that the participant is within an area within a predetermined distance, e.g., from 50 m (lower limit) to 150 m (upper limit) from home, the management app 100 determines that the participant has returned home from the event venue and displays Home 2101 on the event schedule details screen 2100. Figure 21 indicates the participants A, B, C, D, and E as participants who have arrived home (Home 2101). Alternatively, the participant who has arrived home may be displayed when the participant presses a "Returned Home" button (not shown) for notifying that the participant has arrived home.

### 4-20. FUNCTION FOR NOTIFYING SUPERVISOR'S PHONE THAT PARTICIPANT HAS NOT RETURNED HOME AFTER EVENT

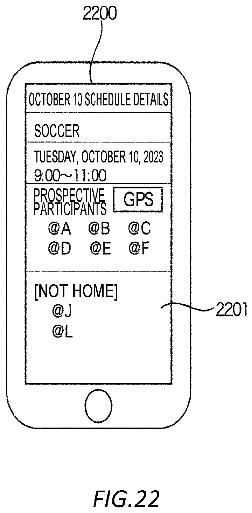

As illustrated in Figure 22, the supervisor's smartphone 101 includes a not-home notification function that notifies that a participant has not returned home yet after the event. After the elapse of a predetermined time after the event, the management app 100 determines whether or not a participant has arrived home based on the participant's phone location information. If it is determined that the participant has not arrived home, the participant's status is set to "not home". The supervisor's management app 100 acquires the statuses of the event participants, and displays participants whose status is "not home" as Not Home 2201 on the event schedule details screen 2200. A push notification with sound may be sent to the supervisor's management app 100 when a participant's status changes from "not home" to "returned home".

Alternatively, the management app 100 on the participant's smartphone 101 may determine whether or not the participant has arrived home based on the participant's phone location information. If it is determined that the participant has not arrived home, a notification of the participant's phone's "not home" status may be sent to the management app 100 on the supervisor's smartphone 101.

The participants who have not returned home mentioned above may be displayed either on the message screen or on the GPS map screen.

If it is determined, from the location information of a participant's phone, that the participant is not within a predetermined distance, e.g., from 50 m (lower limit) to 150 m (upper limit)) from home, the management app 100 determines that the participant has not returned home yet from the event venue and displays Not Home 2201 on the event schedule details screen 2200. Figure 22 indicates the participants J and L are not home, as the participants having not arrived home (Not Home 2201).

### 4-21. FUNCTION FOR NOTIFYING GUARDIAN'S PHONE THAT PARTICIPANT HAS NOT RETURNED HOME AFTER EVENT

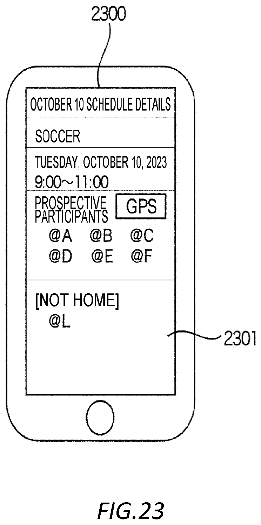

As illustrated in Figure 23, the guardian's smartphone 101 includes a not-home notification function for notifying that a participant associated with the guardian has not returned home yet after the event. After the elapse of a predetermined time after the event, the management app 100 determines whether or not a participant associated with the guardian's phone has arrived home based on the participant's phone location information. If it is determined that the participant has not arrived home, the participant's status is set to "not home". The guardian's management app 100 acquires the status of the participant's phone associated with the guardian's phone, and displays the participants whose status is "not home" as Not Home 2301 on the event schedule details screen 2300. A push notification with sound may be sent to the supervisor's management app 100 when the participant's status changes from "not home" to "returned home". The guardian's schedule management app displays only the returned-home information of the participant phone associated with the guardian's phone (e.g., the guardian's child), and does not display the returned-home information of participants' phones not associated with the guardian's phone.

Alternatively, the management app 100 on the participant's smartphone 101 may determine whether or not the participant has arrived home based on the participant's phone location information. If it is determined that the participant has not arrived home, a notification of the participant's phone's "not home" status may be sent to the management app 100 on the guardian's smartphone 101.

The not-home status of the participant's phone associated with the guardian's phone may be displayed either on the message screen or on the GPS map screen.

If it is determined, from the location information of the participant's phone, that the participant's phone is not within a predetermined distance, e.g., from 50 m (lower limit) to 150 m (upper limit) from home, the management app 100 determines that the participant has not returned home from the event venue and displays Not Home 2301 on the event schedule details screen 2300. Figure 23 indicates the participant L is not home, as the participant having not arrived home (Not Home 2301).

### 4-22. FUNCTION FOR SENDING THE RETURN-HOME STATUS OF PARTICIPANT'S PHONE AFTER EVENT TO BE DISPLAYED ON GPS MAP SCREEN

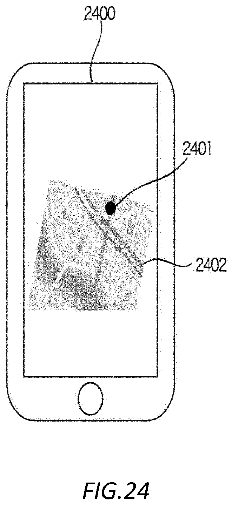

As illustrated in Figure 24, the guardian's smartphone 101 includes a return-home status notification function for notifying the return-home status of only the participant associated with the guardian's phone after the event. The management app 100 may periodically acquire the location information of only a participant associated with the guardian's phone (e.g., a guardian's child) for a predetermined period, e.g., 60 minutes (lower limit), or 90 minutes, or 120 minutes (upper limit) after the event, and indicate the current location 2401 of the participant's phone over the GPS map information 2402 on a return-home status GPS map screen 2400. The participant's guardian can thus check the status of the participant coming home after the event on the management app 100.

### 4-23. FUNCTION FOR SETTING DISPLAY AND ACQUISITION TIME PERIOD OF LOCATION INFORMATION

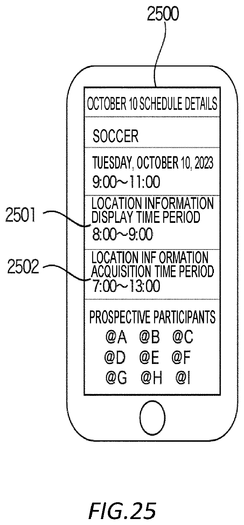

As illustrated in Figure 25, the supervisor's smartphone 101 includes a function for setting a time period during which the current location of a participant's phone can be displayed on the GPS map screen. On the schedule details screen 2500 of the supervisor's smartphone 101, a display time period field 2501 is displayed for the supervisor to specify a time period during which the location information of an event participant's phone can be displayed. The supervisor can display, using the management app 100, the current location of the participant's phone on the GPS map screen during the set time period (8:00 to 9:00 as entered in the "location information display time period" in the drawing). For example, a predetermined period of time before the start time of the event may be set as the set time period by default. The supervisor may be allowed, or not allowed, to update this time period setting.

The supervisor's smartphone 101 includes a function for setting a time period during which the location information of a participant's phone can be acquired. On the schedule details screen 2500 of the supervisor's smartphone 101, an acquisition time period field 2502 is displayed for the supervisor to specify a time period during which the location information of an event participant's phone can be acquired. The supervisor can acquire, using the management app 100, the location information of the participant's phone during the set time period (7:00 to 13:00 as entered in the "location information acquisition time period" in the drawing). For example, the time period may be set to include the duration of the event and predetermined hours before and after the event. The supervisor may be allowed, or not allowed, to update this time period setting.

### 5. VARIOUS FUNCTIONS OF SCHEDULE MANAGEMENT APP

The schedule management app causes the computer (controller 110) of the smartphone 101 to function as various means.

The schedule management application (management app 100) according to one embodiment that allows registration of information of plural events causes
the computer (controller 110) to function as
an event registration means for registering a name of an event, a venue of the event, a participant of the event, and a supervisor who supervises the participant;
a location information acquisition means for acquiring location information of a phone of the event participant;
a display range setting means for setting a location information display range, which indicates a limited range in which location information of the event participant's phone is allowed to be displayed on a display unit; and
a display control means for causing the display unit to display information indicating a location of the participant's phone present within a limited range set by the display range setting means, by using the location information of the participant's phone acquired by the location information acquisition means.

The schedule management application according to one embodiment causes
the computer (controller 110) to function as
a display time period setting means for setting a location information display time period, which indicates a limited time period during which an image of location information of the event participant is allowed to be displayed on the display unit, wherein
the event registration means registers a time of the event, and
the display control means causes the display unit to display an image of information indicating a location of the participant present within a limited range set by the display range setting means, by using the participant's location information acquired by the location information acquisition means during a limited time period set by the display time period setting means.

The schedule management application according to one embodiment causes
the computer (controller 110) to function as
a message sending means for sending a message to a supervisor's information processing terminal or an information processing terminal of a guardian linked to the participant's information processing terminal, when a location as indicated by the location information of the participant's information processing terminal acquired by the location information acquisition means is within a predetermined range including the event venue.

The schedule management application according to one embodiment causes
the computer (controller 110) to function as
an absence notification means for notifying a supervisor's information processing terminal or an information processing terminal of a guardian linked to the participant's information processing terminal that the participant is absent, when a location as indicated by the location information of the participant's information processing terminal acquired by the location information acquisition means at a predetermined time before the time of the event is not within a predetermined range including the event venue.

The schedule management application according to one embodiment causes
the computer (controller 110) to function as:
a user information registration means for registering return location information that indicates a return location (e.g., home address) of the participant's information processing terminal; and
a return notification means notifying a supervisor's information processing terminal that the participant's information processing terminal has returned, when a location as indicated by the location information of the participant's information processing terminal acquired by the location information acquisition means after the end of the event is within a predetermined range including the location indicating the return location information.

The schedule management application according to one embodiment causes
the computer (controller 110) to function as
a user information registration means for registering return location information that indicates a return location (e.g., home address) of the participant's information processing terminal; and
a not-return notification means notifying a supervisor's information processing terminal or an information processing terminal of a guardian linked to the participant's information processing terminal that the participant's information processing terminal has not returned, when a location as indicated by the location information of the participant's information processing terminal acquired by the location information acquisition means after the end of the event is not within a predetermined range including the location indicating the return location information.

The information processing device (smartphone 101) according to one embodiment executes
the schedule management application (management app 100) that allows registration of information of plural events, and includes:
an event registration means for registering a name of an event, a venue of the event, a participant of the event, and a supervisor who supervises the participant;
a location information acquisition means for acquiring location information of an event participant's information processing device;
a display range setting means for setting a location information display range, which is a limited range in which location information of the event participant's information processing device is allowed to be displayed on a display unit; and
a display control means causing the display unit to display information indicating a location of the participant's information processing device present within a limited range set by the display range setting means, by using the location information of the participant's information processing device acquired by the location information acquisition means.

The information processing device (smartphone 101) according to one embodiment further includes
a display time period setting means for setting a location information display time period, which indicates a limited time period during which an image of location information of the event participant is allowed to be displayed on the display unit, wherein
the event registration means registers a time of the event, and
the display control means causes the display unit to display an image of information indicating a location of the participant present within a limited range set by the display range setting means, by using the participant's location information acquired by the location information acquisition means during a limited time period set by the display time period setting means.

With the above-described features, the schedule management app causes the computer (controller 110) of the smartphone 101 to function as the above-described means, and to display various kinds of information when predetermined conditions are met, thereby increasing the response speed of the computer.

The schedule management app filters users based on predetermined conditions, which improves the memory efficiency of the computer and reduces the display processing load of the computer. Moreover, the schedule management app reduces the computer's communication data amount and battery consumption by restricting access from smartphones 101 from outside a specified range or time period.

### (OTHER EMBODIMENTS)

The present disclosure can be implemented also by executing the following processing. Namely, the processing includes: supplying software (a program) that implements the functions of the embodiment described above to a system or an apparatus via a network or various memory media, and reading out and executing the program by a computer (or CPU, MPU, etc.) of the system or apparatus. The memory medium may be a non-transitory computer-readable storage medium. The present disclosure can be applied to a system composed of a plurality of units, or to an apparatus composed of a single unit. The present disclosure is not limited to the embodiments described above. Various modifications (including organic combinations of various embodiments) are possible based on the subject matter of the present disclosure, and these should not be excluded from the scope of the present disclosure. Namely, not only the embodiments described above but also combinations of their variations should all be included in the present disclosure.

For example, while the event is related to a soccer game in the embodiments described above, the event managed by the management app 100 is not limited to soccer games. For example, the event may be any school event (e.g., sports day, concert, culture festival, school trip, and many others), or any private event (e.g., part-time work schedule, trip with friends, etc.). Namely, the management app 100 is expected to be used to manage a school event or a part-time work shift, and therefore may not necessarily use the names and roles such as "event," "home," "supervisor," "message," "return home".

In the embodiment described above, the "home location data" of participants' information processing devices is used to determine whether a participant has left home or arrived home in association with a soccer game event. If the app is used for an event in which participants return to a place other than "home," location data of somewhere other than "home" (return location data) can be used. In this case, the management app 100 can use this "return location data" to determine whether a participant has left or arrived at the return location.

Other than a soccer game event as described in the embodiment, the event may be any of "university or high school club activities", "corporate meetings", or "social gatherings". If the event is a "university or high school club" activity, the "supervisor" in the above-described embodiment may be labeled a "leader," "club representative," or "manager," and the participants may be labeled "college or high school students". In this case, a "guardian" linked to a participant's information processing device need not be registered. If the event is a "corporate meeting", the "supervisor" in the above-described embodiment may be labeled a "meeting host," and the participants may be labeled "employees". In this case, a "guardian" linked to a participant's information processing device need not be registered. If the event is a "social gathering", the "supervisor" in the above-described embodiment may be labeled a "person who entered event data," and the participants may be labeled "friends". In this case, a "guardian" linked to a participant's information processing device need not be registered.

In the embodiment described above, the management app 100 (or the smartphone 101 on which the management app 100 is installed) has both functions of the display time period setting means 152 and the display range setting means 153. Alternatively, the management app 100 may have only either one of the display time period setting means 152 or the display range setting means 153.

### 6. DESCRIPTION OF OPERATIONS OF SCHEDULE MANAGEMENT APP (FLOWCHART)

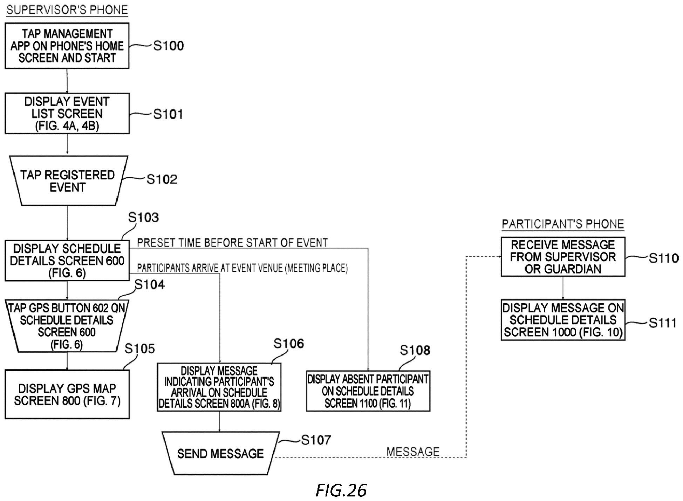

The schedule management app displays various screens on the display unit 102 of the smartphone 101 according to user operations and the location information of the participant's information processing device. Hereinafter, the processing executed by the management app 100 will be described with reference to the flowchart of Figure 26.

First, the operations of the management app 100 executed by the controller 110 of the supervisor's smartphone 101 will be described.

### (S100: STARTING MANAGEMENT APP)

A supervisor taps an icon of the management app 100 displayed on the home screen of the smartphone 101. The controller 110, detecting the tap on the icon of the management app 100, starts the management app 100.

### (S101: DISPLAYING EVENT LIST SCREEN)

The controller 110 displays a list of events registered in the management app 100 on the display unit 102. The event list screen (Figure 4A and Figure 4B) may show events in a calendar format, or show a list of the registered events in the order of the dates. The event list screen may show events for one or more years, months, weeks, or days.

### (S102: SELECTING EVENT)

The supervisor taps one of the events shown on the event list screen (Figure 4A and Figure 4B) to select the desired event.

### (S103: DISPLAYING SCHEDULE DETAILS SCREEN 600)

The controller 110 displays the schedule details screen 600 (see Figure 6), which shows the detailed information of the selected event, on the display unit 102.

### (S104: OPERATING GPS BUTTON)

The supervisor taps the GPS button 602 displayed on the schedule details screen 600 (Figure 6).

### (S105: DISPLAYING MAP SCREEN)

The controller 110 detects a tap on the GPS button 602 and displays the GPS map screen 700 (see Figure 7) on the display unit 102. This enables the manager to check the location information of a participant's information processing device on the GPS map screen 700 (Figure 7) at a predetermined time, e.g., 60 minutes (lower limit), or 90 minutes, or 120 minutes (upper limit) before the start time of the event.

### (S106: NOTIFYING ARRIVAL OF PARTICIPANT'S INFORMATION PROCESSING DEVICE)

The controller 110 displays the schedule details screen 800A (see Figure 8) on the display unit 102 if it is determined that the participant's information processing device has arrived at or within a radius of for example, 100 m (lower limit) or 300 m (upper limit) from the event venue (meeting place). The schedule details screen 800A shows a message button 801 including the first few words (e.g., "I have arrived") or outline of the message sent from the smartphone 101 of the participant who has arrived at the venue.

### (S107: SENDING MESSAGE)

The supervisor, having seen the message sent at S106 (Figure 8), can send a message (e.g., "Glad to see you here. Play your best today!") to the participant.

### (S108: DISPLAYING ABSENT PARTICIPANT)

The controller 110 displays the event details screen 1100 (see Figure 11) showing the information processing device of an absent participant if it is determined that the participant's information processing device is not present within a predetermined range including the event's meeting place (e.g., within a radius of 1 km or 2 km from the meeting place) at a predetermined time (e.g., 15 minutes) before the start time of the event.

Next, the operations of the management app 100 executed by the controller 110 of the participant's smartphone 101 will be described.

### (S110: RECEIVING MESSAGE)

A message sent from the supervisor's management app 100 is received by the controller 110 of the participant's smartphone 101.

### (S111: DISPLAYING MESSAGE)

The controller 110 displays this message (e.g., "Glad to see you here. Play your best today!") on the event details screen 1000 (Figure 10).

### 7. DESCRIPTION OF OPERATIONS OF SUPERVISOR'S, PARTICIPANT'S, AND GUARDIAN'S SMARTPHONES 101 (INFORMATION PROCESSING FLOWCHART)

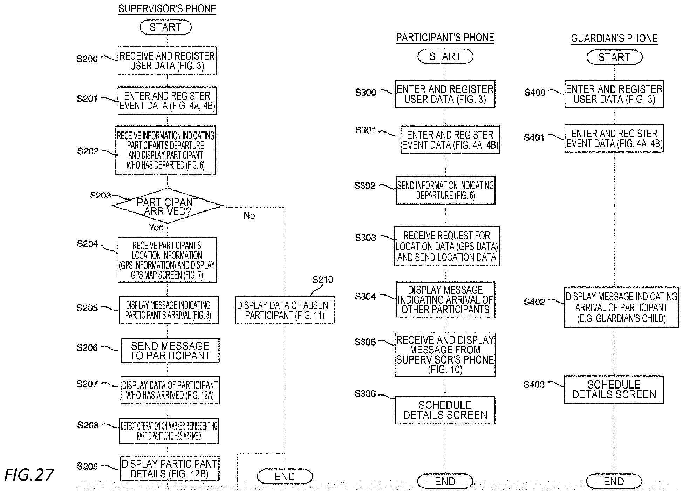

The information processing executed by the supervisor's, participants', and guardian's smartphones 101 on which the management app 100 is installed will be described with reference to the information processing flowchart of Figure 27. Each process step in Figure 27 is executed by the controller 110 in the smartphone 101 that runs the management app 100.

### (DESCRIPTION OF OPERATIONS OF SUPERVISOR'S SMARTPHONE 101) (S200: RECEIVING AND REGISTERING USER DATA)

The supervisor's smartphone 101 displays the user registration screen 300 (Figure 3) for registering user details. The supervisor enters various kinds of information relating to a user such as the user's name on the user registration screen 300. The supervisor's smartphone 101 receives the entered information relating to the user. The supervisor's smartphone 101 registers the received information relating to the user.

### (S201: ENTERING AND REGISTERING EVENT DATA)

The supervisor's smartphone 101 displays the event registration screen 400 (Figure 4A and Figure 4B) for registering event details. The supervisor enters various kinds of information relating to an event such as the event's name on the event registration screen 400. The supervisor's smartphone 101 receives the entered information relating to the event. The supervisor's smartphone 101 registers the received information relating to the event.

### (S202: RECEIVING INFORMATION INDICATING DEPARTURE OF PARTICIPANT FROM HOME, AND DISPLAYING PARTICIPANT WHO HAS DEPARTED)

The supervisor's smartphone 101 receives departure information from the participant's smartphone 101 indicating that the participant has left home. The supervisor's smartphone 101 displays the schedule details screen 600 (Figure 6) including the Departed 601 representing the participant who has departed for the event venue.

### (S203: DETERMINING WHETHER PARTICIPANT HAS ARRIVED)

The supervisor's smartphone 101 determines whether or not the event participant has arrived at the event venue. For example, the supervisor's smartphone 101 determines whether or not the event participant has arrived at or within a radius of for example, 100 m (lower limit) or 300 m (upper limit) from the event venue (meeting place) based on the received location information (GPS information) of the participant's smartphone 101, and displays the location of the participant's smartphone on the GPS map screen 700 (Figure 7).

### (S204: RECEIVING PARTICIPANT'S LOCATION INFORMATION (GPS INFORMATION) AND DISPLAYING GPS MAP SCREEN)

When the supervisor presses the GPS button 602 on the schedule details screen 600 (Figure 6), the supervisor's smartphone 101, in response to this operation of pressing the GPS button 602, receives the location information (GPS information) of the participant's smartphone 101. The supervisor's phone then displays the GPS map screen 700 (Figure 7) based on the received location information (GPS information) of the participant's smartphone 101.

### (S205: DISPLAYING MESSAGE INDICATING ARRIVAL OF PARTICIPANT)

The supervisor's smartphone 101 displays the schedule details screen 800A (Figure 8) indicating the arrival of the participant's phone at or within a radius of for example, 100 m (lower limit) or 300 m (upper limit) from the event venue (meeting place). The schedule details screen 800A shows the message button 801 including the first few words or outline of the message sent from the smartphone 101 of the participant who has arrived at the venue.

### (S206: SENDING MESSAGE TO PARTICIPANT)

The supervisor sends a message (e.g., "Glad to see you here. Play your best today!") to the participant's smartphone 101, using the message sending function of the smartphone 101.

### (S207: DISPLAYING DATA RELATING TO PARTICIPANT WHO HAS ARRIVED)

If it is determined at S203 that the event participant has arrived at the event venue (S203: Yes), the supervisor's smartphone 101 displays the GPS map screen 1200 (Figure 12A) including the data relating to the participant who has arrived.

### (S208: DETECTING OPERATION ON THE MARKER RELATING TO PARTICIPANT WHO HAS ARRIVED)

When the user selects the marker 1201 (or the name) indicating the current location of the participant (participant's smartphone 101) shown on the GPS map screen 1200 (Figure 12A), the supervisor's smartphone 101 detects this user operation.

### (S209: DISPLAYING PARTICIPANT DETAILS SCREEN)

Upon detecting this user operation, the supervisor's smartphone 101 displays the participant details screen 1210 (Figure 12B) showing the detailed data of the participant linked to the selected marker 1201.

### (S210: DISPLAYING DATA RELATING TO ABSENT PARTICIPANT)

On the other hand, if it is determined at S203 that the event participant has not arrived at the event venue (S203: No), the supervisor's smartphone 101 displays the event details screen 1000 (Figure 11) including the data relating to the absent participant.

### (DESCRIPTION OF OPERATIONS OF PARTICIPANT'S SMARTPHONE 101)

### (S300: ENTERING AND REGISTERING USER DATA)

The participant's smartphone 101 displays the user registration screen 300 (Figure 3) for registration of user details. The participant enters various kinds of information relating to the user such as the user's name on the user registration screen 300. The participant's smartphone 101 receives the entered information relating to the user. The participant's smartphone 101 registers the received information relating to the user.

### (S301: ENTERING AND REGISTERING EVENT DATA)

The participant's smartphone 101 displays the event registration screen 400 (Figure 4A and Figure 4B) for registration of event details. The participant enters various kinds of information relating to an event such as the event's name on the event registration screen 400. The participant's smartphone 101 receives the entered information relating to the event. The participant's smartphone 101 registers the received information relating to the event.

Step S301 may only allow reception and registration of event data from the supervisor or guardian and not from a participant.

### (S302: SENDING INFORMATION INDICATING DEPARTURE)

Using the above-described participant's departure notification function, the participant's smartphone 101 sends departure information to the supervisor's smartphone 101 indicating the departure of the participant for the event venue (Figure 6). This departure information may be sent to the guardian's smartphone 101. This feature prevents degradation of information accuracy caused by erroneous or delayed user operation, and enables objective and instant transmission of departure information to the supervisor's or guardian's smartphone 101.

### (S303: RECEIVING REQUEST FOR LOCATION DATA (GPS DATA) AND SENDING LOCATION DATA)

The participant's smartphone 101 receives a request for location data (GPS data) from the supervisor's smartphone 101, and sends the location data (GPS data) to the supervisor's smartphone 101 in response to the request. This request from the supervisor's smartphone 101 is sent to the participant's smartphone 101, for example, when the supervisor presses the GPS button 602 on the schedule details screen 600.

### (S304: DISPLAYING MESSAGE INDICATING ARRIVAL OF OTHER PARTICIPANTS)

The participant's smartphone 101 may perform steps similar to S204 to S210 on the supervisor's smartphone 101, such as displaying data relating to other participants who have arrived, detecting an operation on the markers relating to other participants who have arrived, displaying details of other participants, displaying a message indicating the arrival of other participants, sending a message to other participants, or displaying data relating to absent participants.

### (S305: RECEIVING MESSAGE FROM SUPERVISOR'S PHONE)

The participant's smartphone 101 receives a message sent from the supervisor's smartphone 101 at S209 described above. The participant's smartphone 101 displays the received message (e.g., "Glad to see you here. Play your best today!") on the display unit (Figure 10).

### (S306: DISPLAYING SCHEDULE DETAILS SCREEN)

The participant's smartphone 101 displays the schedule details screen 1000 before the received message is displayed.

### (DESCRIPTION OF OPERATIONS OF GUARDIAN'S SMARTPHONE 101)

### (S400: ENTERING AND REGISTERING USER DATA)

The guardian's smartphone 101 displays the user registration screen 300 (Figure 3) for registration of user details. The guardian enters various kinds of information relating to the user such as the user's name on the user registration screen 300. The guardian's smartphone 101 receives the entered information relating to the user. The guardian's smartphone 101 registers the received information relating to the user.

### (S401: ENTERING AND REGISTERING EVENT DATA)

The guardian's smartphone 101 displays the event registration screen 400 (Figure 4A and Figure 4B) for registration of event details. The guardian enters various kinds of information relating to an event such as the event's name on the event registration screen 400. The guardian's smartphone 101 receives the entered information relating to the event. The guardian's smartphone 101 registers the received information relating to the event.

Step S401 may only allow reception and registration of event data from the supervisor or participant and not from a guardian.

### (S402: DISPLAYING MESSAGE INDICATING ARRIVAL OF PARTICIPANT (GUARDIAN'S CHILD))

The guardian's smartphone 101 may perform steps similar to S304 on the participant's smartphone 101, such as displaying data relating to the participant (guardian's child) who has arrived, detecting an operation on the marker relating to the participant (guardian's child) who has arrived, displaying details of the participant (guardian's child), displaying a message indicating the arrival of the participant (guardian's child), sending a message to the participant (guardian's child), or displaying data relating to the absent participant (guardian's child). The management app 100 can offer processing reliability by displaying markers and messages on the guardian's smartphone 101.

### (S403: DISPLAYING SCHEDULE DETAILS SCREEN)

The guardian's smartphone 101 displays the schedule details screen 1000 before displaying the content at S402.

As an alternative embodiment, a graph or diagram can be shown in place of or in addition to the map in the function of displaying the arrival of a participant at a meeting place. The display control means 155 may show a graph, an illustration, or a three-dimensional representation of an object, for example, in place of or in addition to a map on the display unit 102.

The display control means 155 may also show a graph indicating the distance to a destination for a participant, for example, in place of or in addition to the map on the display unit 102.

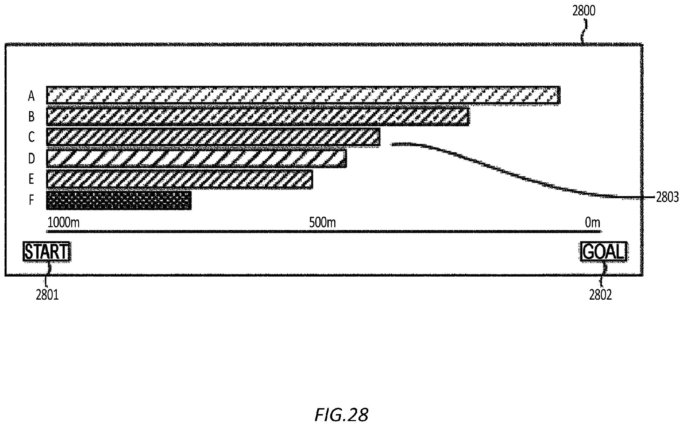

Figure 28 is a diagram illustrating a phone screen for explaining the function in the schedule management application that displays a graph. As illustrated in Figure 28, a screen 2800 showing a graph relating to the distance to the destination for a participant may be displayed on the supervisor's smartphone 101.

For example, the management app 100 may acquire location information of participants (A to F) via an API (Application Programming Interface) available to the management app 100, and obtain the current locations of the participants (A to F) and the distances to the goal (destination) 2802 at the time when the location information was acquired, based on the location information.

Based on the current locations of the participants (A to F), the management app 100 may also generate a graph 2803 in which their distances to the goal (destination) 2802 and the rankings of the participants' (A to F) based on their distances to the goal 2802 are associated with each other. The management app 100 may also display a graph on the display unit 102 showing how close each participant (A to F) got (moved) to the goal 2802 from the start point 2801.

The management app 100 may also generate a dynamic graph based on the acquired location information of each participant (A to F). With the management app 100, the start point 2801 may be fixed as a predetermined value (e.g., 1000 m), or may be varied according to the current location of each participant (A to F). This allows the participant's supervisor to check whether each acquired participant is heading to the destination correctly by viewing the screen of Figure 28.

The management app 100 may display the graph 2803 on the screen 2800 only during a predetermined period (e.g., 1 hour) before the start time of the event, and only within an area including the ground specified as the venue (meeting place). The area may be variably set, for example, to a range within a radius of 500 m or 300 m from the ground. The management app 100 may show the graph 2803 such that the bars extend as the current location of each participant (A to F) moves closer to the goal (destination) 2802. In this case, longer graph bars indicate closer distances to the goal. The management app 100 may show the graph 2803 such that the bars shorten as the current location of each participant (A to F) moves closer to the goal (destination) 2802. In this case, shorter graph bars indicate closer distances to the goal.

Therefore, the manager or coach of the soccer team who is set as the supervisor can check the screen 2800 indicating the locations of the participants' phones within an area including the soccer ground in the form of a graph, from a predetermined time before the start of the soccer game (which can be set variably within a range from 60 minutes (lower limit) to 120 minutes (upper limit), for example). The visual graph representation helps the supervisor to understand the distance from each participant (A to F) to the goal (destination) 2802 in association with the rankings of each participant (A to F) based on their distance to the goal 2802. The intuitive interface allows the manager or coach of the soccer team who is set as the supervisor to recognize the specific status of each participant (A to F) only by checking the screen 2800.

The display range setting means may set the location information display range in accordance with the information on the distance from the meeting place. The display range setting means may set the location information display range, for example, in accordance with the distance from the meeting place (e.g., within a radius of 500 m from the event venue). The information regarding the distance from the meeting place may be acquired from a user-operated information processing device.

The user can set information regarding the distance from the meeting place by specifying a range, or by setting a range using a preset circle or rectangle, on a map displayed on the information processing device.

The display time period setting means 152 may set a location information display time period in accordance with the meeting time.

The display time period setting means 152 may set the location information display time period by specifying a range of time (e.g., 8:00 to 9:00). The display time period setting means 152 may set the location information display time period by specifying a time associated with a start time or an end time of the event (e.g., one hour before the event start time).

The management app 100 restricts the range or time for a supervisor of an event to check location information. This appropriately limits the information displayed on users' terminal devices so that the processing speed of displaying information on user's terminal devices can be increased. The management app 100 may include a geofence function that limits the geographic range of display. This limits the acquisition of user information outside of the event venue, reducing the terminals' memory and battery consumption as well as communication costs. The management app 100 may also combine geofencing and time-limiting functions. This allows for efficient, object-specific data processing, reducing the acquisition of user information to the minimum necessary level while minimizing the amount of data transmitted and the energy consumption of user terminal devices.

The management app 100 can also save memories in the storage unit of users' terminal devices by limiting the information displayed as images on the display unit of users' terminal devices. The amount of data transmitted between the management app 100 and users' terminal devices is also reduced.

The management app 100 restricts the range and time for checking location information to protect the privacy of at least the participants. Considering privacy in terms of the range and time of location information in this way helps enhance user confidentiality.

The management app 100 can also cooperate with an external device operating an AI agent. The AI agent may acquire information such as event names from a participant's or supervisor's smartphone 101, and perform the processing for registering the name, venue, and participants of the event, and the supervisor who supervises the participants. Alternatively, the AI agent may send acquired information such as event names to the management app 100, which in turn acquires information such as event names from a participant's or supervisor's smartphone 101. The AI agent may then perform the processing for registering the name, venue, and participants of the event, and the supervisor who supervises the participants.

The management app 100 may also cooperate with other club activity management applications or services via an API to acquire the name, venue, date, and participants of an event, and the supervisor who supervises the participants. In this case, the management app 100 may acquire information such as an event name from the participants' or supervisor's smartphone 101, acquire the location information of each participant on the day of the event, and perform the process steps described above. The management app 100 can also be applied to evacuation guidance during a disaster, or to safety management.

The hardware configuration of the smartphone 101 on which the management app 100 is installed is not limited to the one described above. For example, the management app 100 may be installed on a terminal device that does not have a screen and is operated by audio (e.g., user's voice). It may be an AI-equipped, audio-operable terminal device. Even though the terminal device does not have a screen, users can operate the terminal device by audio (e.g., to send a message or to read out the message content). The terminal device on which the management app 100 is installed may have a projection function to project information onto a user's palm instead of the display unit.

### <Clause 1>

An information processing method implemented by an information processing device including a processor and a memory, the method comprising steps of:
acquiring, by the processor, a name of an event, a venue of the event, a participant of the event, a time of the event, and a supervisor who supervises the participant that are stored in the memory;
acquiring location information of a participant of the event from an information processing terminal used by the event participant;
setting a location information display range, which indicates a limited range in which an image of location information of the event participant is allowed to be displayed on a display unit of the information processing device;
setting a location information display time period, which is a limited time period during which it is allowed to display an image of location information of the event participant on the display unit; and
displaying an image of information on the display unit, indicating a location of the event participant based on location information of the event participant who is present within the location information display range during the time period indicated by the location information display time period.

### <Clause 2>

A non-transitory recording medium storing a program for causing a processor of an information processing device to execute:
acquiring a name of an event, a venue of the event, a participant of the event, a time of the event, and a supervisor who supervises the participant that are stored in a memory of the information processing device;
acquiring location information of a participant of the event from an information processing terminal used by the event participant;
setting a location information display range, which indicates a limited range in which an image of location information of the event participant is allowed to be displayed on a display unit of the information processing device;
setting a location information display time period, which is a limited time period during which it is allowed to display an image of location information of the event participant on the display unit; and
displaying an image of information on the display unit, indicating a location of the event participant based on location information of the participant who is present within the location information display range during the time period indicated by the location information display time period.

## Claims

1. An information processing method implemented by a computer, the method comprising:
registering a name of an event, a venue of the event, a participant of the event, and a supervisor who supervises the participant;
acquiring location information of a participant of the event;
setting a location information display range, which indicates a limited range in which an image of location information of the participant of the event is allowed to be displayed on a display unit; and
causing the display unit to display an image of information indicating a location of the participant present within a limited range set in the setting the location information display range, by using location information of the participant acquired in the acquiring location information; and
the method further comprises:
setting a location information display time period, which indicates a limited time period during which an image of location information of the participant of the event is allowed to be displayed on the display unit, wherein
the registering registers a time of the event, and
the causing causes the display unit to display an image of information indicating a location of the participant present within a limited range set in the setting the location information display range, by using location information of the participant acquired in the acquiring location information, during a limited time period set in the setting the location information display time period.

2. The information processing method according to claim 1,
wherein the computer further executes
sending a message to an information processing terminal of the supervisor or an information processing terminal of a guardian linked to the participant, when a location as indicated by location information of the participant acquired in the acquiring location information is within a predetermined limited range including the venue of the event.

3. The information processing method according to claim 1,
wherein the computer further executes
notifying an information processing terminal of the supervisor or an information processing terminal of a guardian linked to the participant that the participant is absent, when a location as indicated by location information of the participant acquired in the acquiring location information during a predetermined limited time period before the time of the event is not within a predetermined limited range including the venue of the event.

4. The information processing method according to claim 1,
wherein the computer further executes:
registering return location information indicating a return location of the participant; and
notifying an information processing terminal of the supervisor that the participant has returned, when a location as indicated by location information of the participant acquired in the acquiring location information is within a predetermined limited range including a location indicating the return location information after end of the time of the event.

5. The information processing method according to claim 1,
wherein the computer further executes:
registering return location information indicating a return location of the participant, and
notifying an information processing terminal of the supervisor or an information processing terminal of a guardian linked to the participant that the participant has not returned, when a location as indicated by location information of the participant acquired in the acquiring location information is not within a predetermined limited range including a location indicating the return location information after end of the time of the event.

6. An information processing device comprising:
an event registration unit which registers a name of an event, a venue of the event, a participant of the event, and a supervisor who supervises the aprticipant;
a location information acquisition unit which acquires location information of the participant of the event;
a display range setting unit which sets a location information display range, which indicates a limited range in which an image of location information of the participant of the event is allowed to be displayed on a display unit;
a display control unit which causes the display unit to display an image of information indicating a location of the participant present within a limited range set by the display range setting unit, by using the location information of the participant acquired by the location information acquisition unit; and
a display time period setting unit which sets a location information display time period, which indicates a limited time period during which an image of location information of the participant of the event is allowed to be displayed on the display unit, wherein
the event registration unit registers a time of the event, and
the display control unit causes the display unit to display an image of information indicating a location of the participant present within a limited range set by the display range setting unit, by using the location information of the participant acquired by the location information acquisition unit during a limited time period set by the display time period setting unit.
